# EUROPEAN PATENT APPLICATION

(11) **EP 4 676 074 A1**
(43) Date of publication of application: **07.01.2026**
(21) Application number: 23952583.5
(22) Date of filing: 20.09.2023
(51) Int. Cl.: H04N 23/65

(54) **CAMERA CONTROL METHOD AND ELECTRONIC DEVICE**

(71) Applicant: Honor Device Co., Ltd., Shenzhen 518040 (CN)
(72) Inventor: HUANG, Libo, Shenzhen, Guangdong 518040 (CN)
(74) Representative: Isarpatent
(86) International application number: PCT/CN2023/120102
(87) International publication number: WO 2025/059922

(57) **Abstract**

This application provides a camera control method and an electronic device. In the method, the electronic device controls, based on a status of the electronic device, a switch to connect a path between a camera and a low power processor, so that the corresponding camera works in a low power mode, to implement camera switching in a low power scenario, and meet requirements in different scenarios.

## Description

### TECHNICAL FIELD

This application relates to the field of terminal devices, and particularly relates to a camera control method and an electronic device.

### BACKGROUND

With development of terminal technologies, a terminal device provides more functions and has more extensive application scenarios. The terminal device can implement corresponding low power functions by introducing a low power component and module, for example, recognize an air gesture when a screen is on. For these functions, an image captured by a camera usually needs to be used at the cost of low power consumption, to implement a corresponding function by recognizing the image. A current low power solution is usually to use an image captured by a single camera. Such a single-camera control solution cannot be applied to a multi-camera scenario.

### SUMMARY

This application provides a camera control method and an electronic device, to control switching between a plurality of cameras according to a scenario requirement.

According to a first aspect, this application provides a camera control method, applied to an electronic device. The electronic device includes a first camera and a second camera, the first camera and the second camera are coupled to a first switch, the first switch is coupled to a low power processor, and the first switch is configured to selectively connect a first data path between the first camera and the low power processor or a second data path between the second camera and the low power processor. The method includes: The electronic device switches from a first state to a second state in response to a received first user operation. When detecting that the electronic device switches from the first state to the second state, the electronic device controls the first switch to connect the first data path. The electronic device performs image recognition on an obtained first image, and obtains a first image recognition result. The first image is captured by the first camera and processed by a low power ISP. The electronic device switches from the second state to the first state in response to a received second user operation. The electronic device detects that the electronic device switches from the second state to the first state, and controls the first switch to connect the second data path. The electronic device performs image recognition on an obtained second image, and obtains a second image recognition result, where the second image is captured by the second camera and processed by the low power ISP.

In this way, in this application, a plurality of cameras are coupled to the low power processor, so that a corresponding path can be connected through switch control without using a scenario, to enable a corresponding camera. In addition, the started (that is, enabled) camera is enabled to run in a low power mode. Therefore, switching to a corresponding camera is implemented in a low power scenario according to different scenario requirements.

For example, the electronic device is a foldable mobile phone, a bar-type mobile phone, a tablet, a computer, or a wearable electronic device.

For example, the first switch is optionally a single-pole double-throw switch, for example, a switch 803-1.

In a possible implementation, detecting that the electronic device switches from the first state to the second state, and connecting, by the first switch, the first data path includes: The electronic device determines, based on camera configuration information, that a camera corresponding to the second state is the first camera. The electronic device connects the first data path based on configuration information corresponding to the first camera in the camera configuration information. The electronic device obtains the first image through the first data path.

In this way, the low power processor in this application is connected to two cameras through one port. A corresponding camera may be turned on based on a status of the electronic device and configuration information, so that the turned-on camera works in a low power mode.

In a possible implementation, the first camera and the second camera are coupled to a second switch, the second switch is coupled to the low power processor, and the second switch is configured to selectively connect a first control path between the first camera and the low power processor or a second control path between the second camera and the low power processor. When it is detected that the electronic device switches from the first state to the second state, the first switch connects the first data path. The method further includes: The electronic device controls, based on the configuration information corresponding to the first camera, the second switch to connect the first control path. The electronic device transmits a control signal to the first camera through the first control path.

In this way, the low power processor in this application may switch a control circuit by using a switch, to exchange a control signal with an enabled camera, for example, provide an electrical signal for the camera.

In a possible implementation, detecting that the electronic device switches from the second state to the first state, and connecting, by the first switch, the second data path includes: The electronic device determines, based on the camera configuration information, that a camera corresponding to the first state is the second camera. The electronic device connects the second data path based on configuration information corresponding to the second camera in the camera configuration information.

In this way, the low power processor in this application is connected to two cameras through one port. A corresponding camera may be turned on based on a status of the electronic device and configuration information, so that the turned-on camera works in a low power mode.

In a possible implementation, detecting that the electronic device switches from the second state to the first state, and connecting, by the first switch, the second data path includes: The electronic device controls, based on the configuration information corresponding to the second camera, the second switch to connect the second control path; and the electronic device transmits a control signal to the second camera through the second control path.

In this way, the low power processor in this application may switch a control circuit by using a switch, to exchange a control signal with an enabled camera, for example, provide an electrical signal for the camera.

In a possible implementation, the first switch is coupled to a first port of the low power processor. The second switch is coupled to a second port of the low power processor.

For example, the first port may also be referred to as a data port, and is configured to transmit data, for example, image data.

For example, the second port may also be referred to as a control port, for example, an I2C, MCLK, MIPI, and/or RESET interface.

In a possible implementation, the first state of the electronic device is a folded state, and the second state of the electronic device is an unfolded state. In this way, in this application, a camera that needs to be enabled may be determined based on switching between different states, for example, the folded state and the unfolded state, of the electronic device, and the corresponding camera is enabled by using a control circuit, so that the camera works in a low power model, to meet a current scenario requirement.

In a possible implementation, the first camera is disposed on an external screen of the electronic device, and the second camera is disposed on an internal screen of the electronic device. In this way, in this application, a camera that needs to be enabled may be determined based on switching between different states, for example, the folded state and the unfolded state, of the electronic device, and the corresponding camera is enabled by using a control circuit, so that the camera works in a low power model, to meet a current scenario requirement.

In a possible implementation, the first camera is a front-facing camera, and the second camera is a rear-facing camera. In this way, in the solution in this application, switching between a plurality of front-facing cameras can be controlled, and switching between a front-facing camera and a rear-facing camera can be controlled, to meet low power scenario requirements of the electronic device in different scenarios.

According to a second aspect, this application provides a control circuit, including: a low power processor; a first switch, where the first switch is coupled to the low power processor; and a first camera and a second camera, where the first camera and the second camera are coupled to the first switch, and the first switch is configured to selectively connect a first data path between the first camera and the low power processor or a second data path between the second camera and the low power processor.

In a possible implementation, the first camera is coupled to a first terminal of the first switch, and the second camera is coupled to a second terminal of the first switch.

In a possible implementation, the first camera and the second camera are coupled to a second switch, the second switch is coupled to the low power processor, and the second switch is configured to selectively connect a first control path between the first camera and the low power processor or a second control path between the second camera and the low power processor.

In a possible implementation, the first switch is coupled to a first port of the low power processor; and the second switch is coupled to a second port of the low power processor.

In a possible implementation, the low power processor is configured to send a first control signal to the first switch, to control the first switch to connect the first data path; and the low power processor is further configured to send a second control signal to the first switch, to control the first switch to connect the second data path.

In a possible implementation, the first camera is disposed on an external screen of the electronic device, and the second camera is disposed on an internal screen of the electronic device.

In a possible implementation, the first camera is a front-facing camera, and the second camera is a rear-facing camera.

The second aspect and any implementation of the second aspect are respectively corresponding to the first aspect and any implementation of the first aspect. For technical effects corresponding to the second aspect and any implementation of the second aspect, refer to the technical effects corresponding to the first aspect and any implementation of the first aspect. Details are not described herein again.

According to a third aspect, this application provides a camera control method, applied to an electronic device. The electronic device includes a first camera and a second camera, the first camera and the second camera are coupled to a first switch, the first switch is coupled to a low power processor, and the first switch is configured to selectively connect a first data path between the first camera and the low power processor or a second data path between the second camera and the low power processor. The method includes: switching, by the electronic device, from a folded state to an unfolded state in response to a received unfolding operation; detecting that the electronic device switches from the folded state to the unfolded state, and connecting, by the first switch, the first data path; performing image recognition on an obtained first image, and obtaining a first image recognition result, where the first image is captured by the first camera and processed by a low power image signal processor ISP; switching, by the electronic device, from the unfolded state to the folded state in response to a received folding operation; detecting that the electronic device switches from the unfolded state to the folded state, and connecting, by the first switch, the second data path; and performing image recognition on an obtained second image, and obtaining a second image recognition result, where the second image is captured by the second camera and processed by the low power ISP.

For example, the electronic device is a foldable device such as a foldable mobile phone, a foldable tablet, or a foldable computer.

In a possible implementation, that the first switch connects the first data path when the electronic device switches from the folded state to the unfolded state includes: determining, based on camera configuration information, that a camera corresponding to the unfolded state is the first camera; connecting the first data path based on configuration information corresponding to the first camera in the camera configuration information; and obtaining the first image through the first data path.

In a possible implementation, the first camera and the second camera are coupled to a second switch, the second switch is coupled to the low power processor, and the second switch is configured to selectively connect a first control path between the first camera and the low power processor or a second control path between the second camera and the low power processor. Detecting that the electronic device switches from the folded state to the unfolded state, and connecting, by the first switch, the first data path further includes: controlling, based on the configuration information corresponding to the first camera, the second switch to connect the first control path; and transmitting a control signal to the first camera through the first control path.

In a possible implementation, detecting that the electronic device switches from the unfolded state to the folded state, and connecting, by the first switch, the second data path includes: determining, based on the camera configuration information, that a camera corresponding to the folded state is the second camera; and connecting the second data path based on configuration information corresponding to the second camera in the camera configuration information.

In a possible implementation, detecting that the electronic device switches from the unfolded state to the folded state, and connecting, by the first switch, the second data path includes: controlling, based on the configuration information corresponding to the second camera, the second switch to connect the second control path; and transmitting a control signal to the second camera through the second control path.

In a possible implementation, the first switch is coupled to a first port of the low power processor; and the second switch is coupled to a second port of the low power processor.

In a possible implementation, the first camera is disposed on an external screen of the electronic device, and the second camera is disposed on an internal screen of the electronic device.

The third aspect and any implementation of the third aspect are respectively corresponding to the first aspect and any implementation of the first aspect. For technical effects corresponding to the third aspect and any implementation of the third aspect, refer to the technical effects corresponding to the first aspect and any implementation of the first aspect. Details are not described herein again.

According to a fourth aspect, this application provides a camera control method, applied to an electronic device. The electronic device includes a first camera and a second camera, the first camera and the second camera are coupled to a first switch, the first switch is coupled to a low power processor, and the first switch is configured to selectively connect a first data path between the first camera and the low power processor or a second data path between the second camera and the low power processor. The method includes: connecting, by the first switch, the first data path; performing image recognition on an obtained first image, and obtaining a first image recognition result, where the first image is captured by the first camera and processed by a low power image signal processor ISP; switching, by the electronic device, from a moving state to a still state in response to a received lifting operation; detecting that the electronic device switches from the moving state to the still state, and connecting, by the first switch, the second data path; and performing image recognition on an obtained second image, and obtaining a second image recognition result, where the second image is captured by the second camera and processed by the low power ISP.

For example, the electronic device may be a device that has a front-facing camera and a rear-facing camera, for example, a bar-type mobile phone.

For example, in this application, only the lifting operation is used as an example for description. In another embodiment, another triggering operation may be performed to trigger a status change of the electronic device, so that the electronic device determines a scenario requirement based on a status, and switches a corresponding camera. This is not limited in this application.

In a possible implementation, detecting that the electronic device switches from the moving state to the still state, and connecting, by the first switch, the second data path includes: determining, based on camera configuration information, that a camera corresponding to a first state is the second camera; and connecting the second data path based on configuration information corresponding to the second camera in the camera configuration information.

In a possible implementation, detecting that the electronic device switches from the moving state to the still state, and connecting, by the first switch, the second data path includes: controlling, based on the configuration information corresponding to the second camera, a second switch to connect a second control path; and transmitting a control signal to the second camera through the second control path.

In a possible implementation, the first switch is coupled to a first port of the low power processor; and the second switch is coupled to a second port of the low power processor.

In a possible implementation, the first camera is a front-facing camera, and the second camera is a rear-facing camera.

According to a fifth aspect, this application provides an electronic device. The electronic device includes one or more processors; a memory; and one or more computer programs, where the one or more computer programs are stored in the memory, and when the computer programs are executed by the one or more processors, the electronic device is enabled to perform the method according to the first aspect or any possible implementation of the first aspect.

According to a sixth aspect, this application provides an electronic device. The electronic device includes one or more processors; a memory; and one or more computer programs, where the one or more computer programs are stored in the memory, and when the computer programs are executed by the one or more processors, the electronic device is enabled to perform the method according to the third aspect or any possible implementation of the third aspect.

According to a seventh aspect, this application provides an electronic device. The electronic device includes one or more processors; a memory; and one or more computer programs, where the one or more computer programs are stored in the memory, and when the computer programs are executed by the one or more processors, the electronic device is enabled to perform the method according to the fourth aspect or any possible implementation of the fourth aspect.

According to an eighth aspect, this application provides a computer-readable medium, configured to store a computer program. The computer program includes instructions used to perform the method according to the first aspect or any possible implementation of the first aspect.

According to a ninth aspect, this application provides a computer-readable medium, configured to store a computer program. The computer program includes instructions used to perform the method according to the third aspect or any possible implementation of the third aspect.

According to a tenth aspect, this application provides a computer-readable medium, configured to store a computer program. The computer program includes instructions used to perform the method according to the fourth aspect or any possible implementation of the fourth aspect.

According to an eleventh aspect, this application provides a computer program, and the computer program includes instructions used to perform the method according to the first aspect or any possible implementation of the first aspect.

According to a twelfth aspect, this application provides a computer program, and the computer program includes instructions used to perform the method according to the third aspect or any possible implementation of the third aspect.

According to a thirteenth aspect, this application provides a computer program, and the computer program includes instructions used to perform the method according to the fourth aspect or any possible implementation of the fourth aspect.

According to a fourteenth aspect, this application provides a chip. The chip includes a processing circuit and a transceiver pin. The transceiver pin and the processing circuit communicate with each other by using an internal connection path, and the processing circuit performs the method in any one of the first aspect or the possible implementations of the first aspect, to control a receiving pin to receive a signal, and control a sending pin to send a signal.

According to a fifteenth aspect, this application provides a chip. The chip includes a processing circuit and a transceiver pin. The transceiver pin and the processing circuit communicate with each other by using an internal connection path, and the processing circuit performs the method in any one of the third aspect or the possible implementations of the third aspect, to control a receiving pin to receive a signal, and control a sending pin to send a signal.

According to a sixteenth aspect, this application provides a chip. The chip includes a processing circuit and a transceiver pin. The transceiver pin and the processing circuit communicate with each other by using an internal connection path, and the processing circuit performs the method in any one of the fourth aspect or the possible implementations of the fourth aspect, to control a receiving pin to receive a signal, and control a sending pin to send a signal.

### BRIEF DESCRIPTION OF DRAWINGS

FIG. 1 is a schematic diagram of an example of a hardware structure of an electronic device;
FIG. 2 is a schematic diagram of an example of a module interface;
FIG. 3 is a schematic diagram of an example of a camera module of an electronic device;
FIG. 4 is a schematic diagram of an example of a software structure of an electronic device;
FIG. 5A~FIG. 5B are schematic diagrams of examples of connection of a low power processor;
FIG. 6A~FIG. 6B are schematic diagrams of examples of connection of a low power processor;
FIG. 7A~FIG. 7B are schematic diagrams of examples of connection of a low power processor;
FIG. 8A~FIG. 8C are schematic diagrams of examples of circuit connection;
FIG. 9 is a flowchart of an example of module interaction;
FIG. 10 is a flowchart of an example of module interaction;
FIG. 11 is a flowchart of an example of module interaction;
FIG. 12 is a flowchart of an example of module interaction; and
FIG. 13 is a schematic diagram of an example of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are some rather than all of embodiments of this application. Based on embodiments of this application, all other embodiments obtained by a person of ordinary skill in the art without creative efforts fall within the protection scope of this application.

The term "and/or" in this specification is merely an association relationship of associated objects, and indicates that three relationships may exist. For example, A and/or B may indicate the following three cases: Only A exists, both A and B exist, and only B exists.

The terms "first" and "second" in the specification and claims of embodiments of this application are used to distinguish between different objects, but are not used to describe a specific sequence of objects. For example, a first target object and a second target object are used to distinguish between different target objects, but are not used to describe a specific sequence of the target objects.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

In descriptions of embodiments of this application, unless otherwise stated, "a plurality of" means two or more. For example, a plurality of processing units mean two or more processing units, and a plurality of systems mean two or more systems.

Optionally, in embodiments of this application, a terminal device may be a mobile terminal with an image shooting function, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), or may be a professional image shooting device, for example, a digital camera, a digital single lens reflex/micro digital single lens reflex, a motion camera, a pan-tilt-zoom camera, or an unmanned aerial vehicle. A specific type of the terminal device is not limited in embodiments of this application.

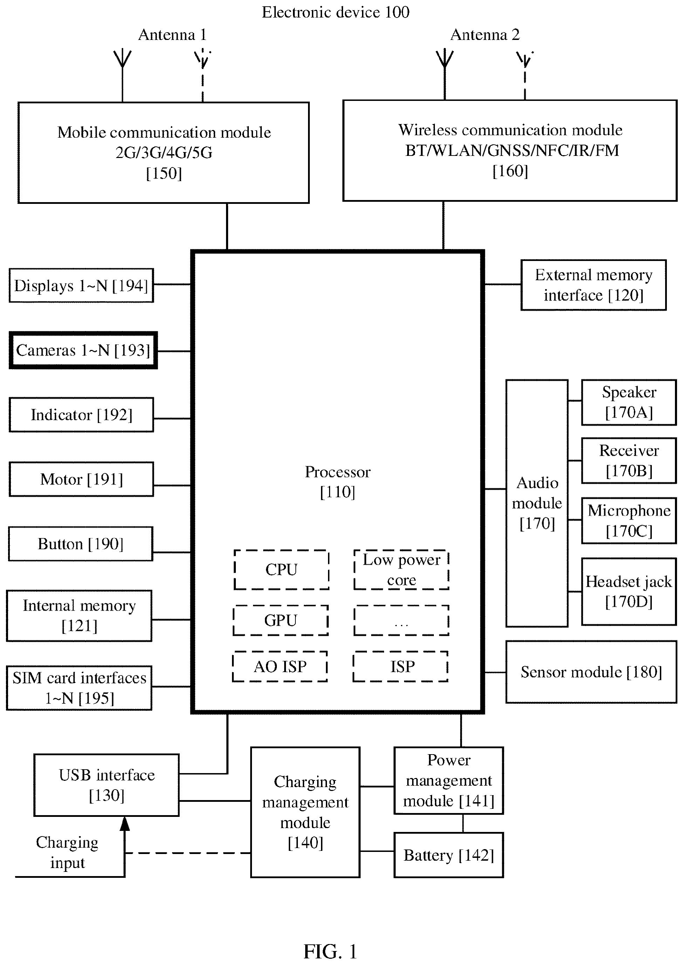

FIG. 1 is a schematic diagram of a structure of an electronic device 100. It should be understood that the electronic device 100 shown in FIG. 1 is only an example of an electronic device, and the electronic device 100 may have more or fewer components than those shown in the figure, may combine two or more components, or may have different component configurations. The components shown in FIG. 1 may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), an AO (always on, always on) ISP, a low power processor, a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The AO ISP, also referred to as a low power ISP, is configured to perform ISP image signal processing on image information to obtain image information in a preset format. Compared with a common ISP, the low power ISP may perform only simple noise reduction, an output image is a grayscale image, and processing such as automatic white balance and automatic focusing is not performed, or simple white balance and/or simple focusing processing may be performed. Image definition depends on only module resolution. Generally, in an AO mode, image output resolution of a camera is low, and therefore, power consumption is low.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

A low power core, also referred to as a low power processor, is configured to implement steps performed by modules on a low power side in embodiments of this application. For example, the low power processor may be configured to switch a camera in a low power mode.

The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may be configured to perform audio communication, and sample, quantize, and code analog signals. In some embodiments, the audio module 170 may be coupled to the wireless communication module 160 by using a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement an image shooting function of the electronic device 100. The processor 110 communicates with the display 194 by using the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset. The interface may alternatively be configured to connect to another electronic device, such as an AR device.

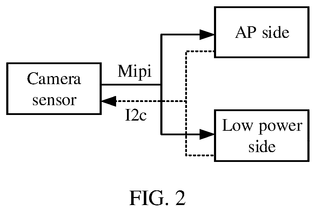

FIG. 2 is a schematic diagram of an example of a module interface. Referring to FIG. 2, data (for example, image data) is transmitted between a camera (that is, a camera sensor (camera sensor)) and an AP side and a low power side through an MIPI interface. The AP side and the low power side may send a control signal to the camera through an I2C interface. The foregoing interface is only an example, and an interface type is not limited in this application. Optionally, the AP side may include components such as a CPU and an ISP, and corresponding software or modules (for example, CameraHal in the following). The low power side may include components such as an AO ISP and a low power processor, and corresponding software or modules (for example, modules on the low power side in the following). In this embodiment of this application, the AP side and the low power side are mutually exclusive. It may be understood that in a process in which the AP side and the camera exchange data (including image data and a control signal) through an interface, the low power side cannot exchange data with the camera, that is, the low power side cannot invoke the camera. In this embodiment of this application, a process of invoking the camera by the AP side and the low power side may also be understood as a process of registering to use the camera (or may be understood as binding to the camera). An object (for example, the AP side) that has registered to use the camera may use the camera. If another side (for example, the low power side) needs to use the camera, only after the AP side deregisters with (or may be understood as releases) the camera, the another side can register with (that is, bind to) the camera and exchange data with the camera. In this embodiment of this application, that a module registers with and deregisters with the camera (that is, the camera) may be understood as that the module calls a registration function (or a registration interface) for binding to the camera. Repeated description is not provided in the following.

It may be understood that the interface connection relationship between the modules shown in this embodiment of this application is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

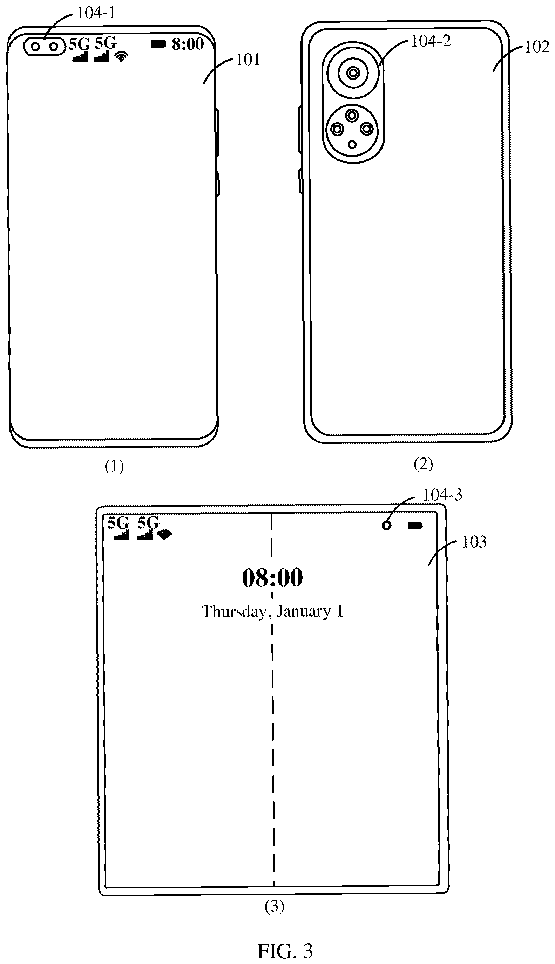

FIG. 3 is a schematic diagram of an example of a camera module of an electronic device. Referring to FIG. 3, (1), (2), and (3) in FIG. 3 illustratively show an external screen front surface 101 and an external screen rear surface 102 of the electronic device 100 in a folded state and an internal screen 103 of the electronic device 100 in an unfolded state respectively. A front surface of the electronic device 100 may be understood as a side facing a user when the user uses the electronic device 100, and a rear surface of the electronic device 100 may be understood as a side facing away from the user when the user uses the electronic device 100.

The camera module 104 is configured to capture a still image or a video. The camera module 104 may be disposed on the front surface (folded state), the rear surface, and/or the internal screen of the electronic device 100. As shown in (1) in FIG. 3, when the camera module 104 is disposed on the front surface of the electronic device 100, a front-facing camera 104-1 may be configured to shoot a scene on a front surface side of the electronic device 100, for example, configured to take a selfie. In some embodiments, the camera module may be referred to as a front-facing camera. As shown in (3) in FIG. 3, when the camera module 104 is disposed on the internal screen of the electronic device 100, and the electronic device 100 is in an unfolded state, a front-facing camera 104-2 may be configured to shoot a scene on a front surface side of the electronic device 100, for example, configured to take a selfie. In some embodiments, the camera module may be referred to as a front-facing camera. To distinguish between the two front-facing cameras, in embodiments of this application, the front-facing camera 104-1 in the folded state is referred to as a front-facing camera-0, and the front-facing camera 104-3 in the unfolded state is referred to as a front-facing camera-1. Repeated description is not provided in the following. As shown in (2) in FIG. 3, when the camera module 104 is disposed on the rear surface of the electronic device 100, a rear-facing camera 104-2 may be configured to shoot a scene on a rear surface side of the electronic device 100. In some embodiments, the camera module may be referred to as a rear-facing camera. During image shooting, the user may select a corresponding camera module based on an image shooting requirement.

It should be noted that a quantity of disposed camera modules 104 is not limited in embodiments of this application, and may be one, two, four, or more. For example, one or more camera modules 104 may be disposed on the front surface of the electronic device 100, and/or one or more camera modules 104 may be disposed on the rear surface of the electronic device 100. When a plurality of camera modules 104 are disposed, the plurality of camera modules 104 may be completely the same or different. For example, lens optical parameters of the plurality of camera modules 104 are different, lens disposing positions are different, lens forms are different, and the like. Embodiments of this application impose no limitation on relative positions for disposing the plurality of camera modules.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

The external memory interface 120 may be configured to connect to an external memory card, such as a micro SD card, to extend a storage capability of the electronic device 100. The external memory card communicates with the processor 110 by using the external memory interface 120, to implement a data storage function. For example, files such as music or videos are stored in the external memory card.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS).

The electronic device 100 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

A software system of the electronic device 100 may use a layered architecture, an event-driven architecture, a microkernel architecture, a micro-service architecture, or a cloud architecture. In this embodiment of this application, an Android system with a layered architecture is used as an example to describe the software structure of the electronic device 100.

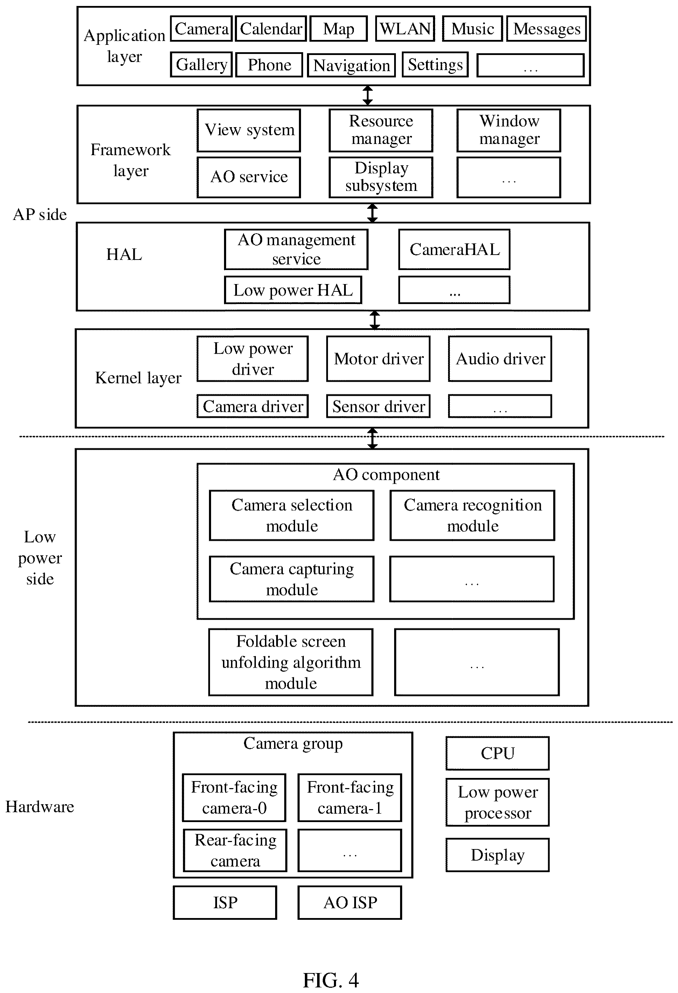

FIG. 4 is a block diagram of a software structure of the electronic device 100 according to an embodiment of this application.

The layered architecture of the electronic device 100 divides software into several layers, and each layer has a clear role and task. The layers communicate with each other through a software interface. In some embodiments, the Android system includes but is not limited to an application layer, a framework layer, a hardware abstract layer (hardware abstract layer, HAL), a kernel layer, a low power layer (which may also be referred to as a low power module layer, and is not limited in this application), and the like from top to bottom.

The application layer may include a series of application packages.

As shown in FIG. 4, the application packages may include applications such as Camera, Gallery, Calendar, Phone, Map, Navigation, WLAN, Bluetooth, Music, Video, and Messages.

The framework layer provides an application programming interface (application programming interface, API) and a programming framework for applications at the application layer. The application framework layer includes some predefined functions.

As shown in FIG. 4, the application framework layer may include but is not limited to a window manager, a view system, a resource manager, an AO service, a display subsystem, and the like.

The window manager is configured to manage window programs. The window manager may obtain a display size, determine whether there is a status bar, lock a screen, take a screenshot, and the like.

The view system includes visual controls, such as a text display control and a picture display control. The view system may be configured to construct an application. A display interface may include one or more views. For example, a display interface including an SMS notification icon may include a text display view and a picture display view.

The resource manager provides various resources for the application, such as a localized string, an icon, a picture, a layout file, and a video file.

The AO service may also be referred to as a low power AO service, and the AO service includes a plurality of sub-services, for example, including but not limited to an air gesture service, an eye gaze always on service, an eye gaze volume reduction service, and an intelligent scanning service. Optionally, the AO service may alternatively be at the application layer. This is not limited in this application.

The HAL layer is an interface layer between the kernel layer of the operating system and hardware (for example, a camera 127) of the electronic device, and aims to abstract the hardware to provide a virtual hardware platform for the operating system.

The HAL layer includes but is not limited to an AO management service, a CameraHAL, and a SensorHAL layer.

The kernel layer is a layer between hardware and software. The kernel layer includes at least a display driver, a camera driver, an audio driver, a sensor driver, a motor driver, a low power module driver (which may also be referred to as a low power core driver, a low power side communication driver, or the like, and is not limited in this application), and the like.

The low power layer includes but is not limited to an AO component, a foldable screen unfolding algorithm module, and the like. The AO component includes but is not limited to a Camera selection module, a Camera recognition module, a Camera capturing module, and the like.

The Camera selection module is configured to control camera switching in a low power mode. The Camera recognition module and the Camera capturing module are configured to process an image captured by a camera in the low power mode. For example, the Camera capturing module is configured to perform image processing on the image captured by the camera. The Camera recognition module is configured to perform image recognition (or may be referred to as image algorithm processing) on a processed image. Optionally, the Camera recognition module is preset with at least one algorithm. The algorithm includes but is not limited to a facial recognition algorithm (used to recognize a facial feature in an image), a face orientation algorithm (used to detect a face orientation), an intelligent code scanning algorithm (used to recognize an image code), an air gesture algorithm (used to detect an air gesture), and the like.

The foldable unfolding algorithm module is configured to recognize a folded state (for example, (1) and (2) in FIG. 3) or an unfolded state (for example, (3) in FIG. 3) of the electronic device.

In this embodiment of this application, the application layer, the framework layer, the HAL layer, and the kernel layer may be understood as an AP side, and a processor or a processing unit such as an AP, a CPU, or a GPU supports each module at the foregoing layers to perform a corresponding step. On a low power side, a low power processor supports each module at the layers to perform a corresponding step.

It may be understood that the layers in the software structure shown in FIG. 4 and components included at the layers do not constitute a specific limitation on the electronic device 100. In some other embodiments of this application, the electronic device 100 may include more or fewer layers than those shown in the figure, and each layer may include more or fewer components. This is not limited in this application.

For example, FIG. 4 further shows some hardware of the electronic device 100, for example, including but not limited to a camera group, a CPU, a low power processor, a display, an ISP, and an AO ISP. The camera group includes but is not limited to a front-facing camera-0 (for example, 104-1 in FIG. 3), a front-facing camera-1 (for example, 104-3 in FIG. 3), a rear-facing camera (for example, 104-2 in FIG. 3), and the like.

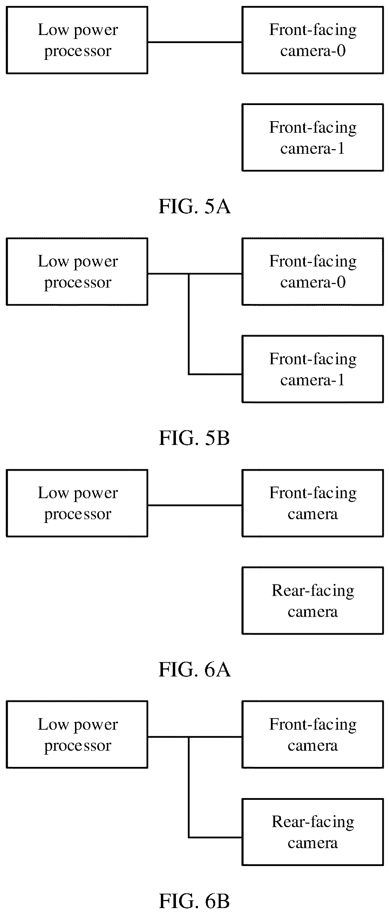

FIG. 5A is a schematic diagram of an example of connection of a low power processor. Referring to FIG. 5A, in the conventional technology, the low power processor provides a low power interface (which may also be referred to as an AO interface, and is not limited in this application), configured to connect to a front-facing camera to exchange data with the front-facing camera. However, when the electronic device includes a plurality of cameras, for example, the front-facing camera-0 and the front-facing camera-1, the low power processor can exchange data with only one of the front-facing cameras. For example, it is assumed that the low power processor is connected to the front-facing camera-0 (for example, 104-1 in FIG. 3). Correspondingly, when the electronic device is in a folded state, the low power processor may invoke the front-facing camera-0, to implement some low power functions based on an image captured by the front-facing camera-0, such as air gesture control and eye gaze volume reduction. When the electronic device is in an unfolded state, the low power processor cannot invoke the front-facing camera-1, that is, a corresponding low power function cannot be implemented.

FIG. 5B is a schematic diagram of connection of a low power processor according to an embodiment of this application. Referring to FIG. 5B, in this embodiment of this application, one low power interface of the low power processor may be connected to a plurality of cameras, for example, the front-facing camera-0 and the front-facing camera-1. In this embodiment of this application, the low power processor may perform AO switching and control by using a circuit, to implement one-to-two, that is, one low power processor controls two front-facing cameras.

FIG. 6A is a schematic diagram of an example of connection of a low power processor. Referring to FIG. 6A, in the conventional technology, the low power processor provides a low power interface (which may also be referred to as an AO interface, and is not limited in this application), configured to connect to a front-facing camera to exchange data with the front-facing camera. However, when the electronic device includes a plurality of cameras, for example, a front-facing camera and a rear-facing camera, the low power processor can exchange data with only one of the front-facing cameras. For example, it is assumed that the low power processor is connected to the front-facing camera (for example, 104-1 in FIG. 3). Correspondingly, when the electronic device is in a folded state, the low power processor may invoke the front-facing camera, to implement some low power functions based on an image captured by the front-facing camera, such as air gesture control and eye gaze volume reduction. However, the low power processor of the electronic device cannot invoke the rear-facing camera, that is, a corresponding low power function cannot be implemented. For example, when an air code scanning function is performed, the low power processor can recognize an image code by using an image captured by only the front-facing camera.

FIG. 6B is a schematic diagram of connection of a low power processor according to an embodiment of this application. Referring to FIG. 6B, in this embodiment of this application, one low power interface of the low power processor may be connected to a plurality of cameras, for example, a front-facing camera and a rear-facing camera. In this embodiment of this application, the low power processor may perform AO switching and control by using a circuit, to implement one-to-two, that is, one low power processor controls the front-facing camera and the rear-facing camera.

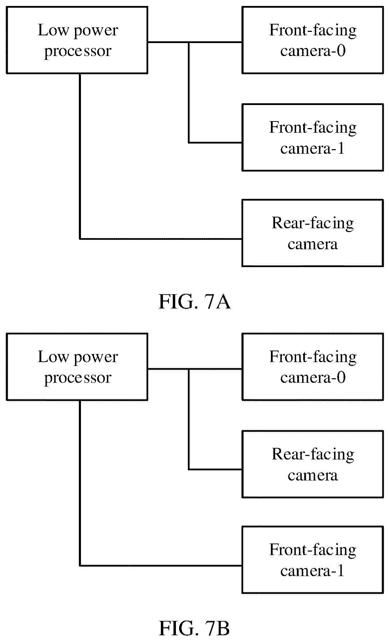

In this embodiment of this application, a one-to-three scenario of the low power processor may be further implemented by using an AO switching and control circuit. FIG. 7A and FIG. 7B are schematic diagrams of examples of connection of a low power processor. Referring to FIG. 7A, the low power processor may control two front-facing cameras (including a front-facing camera-0 and a front-facing camera-1) through one low power interface. For specific descriptions, refer to the foregoing, and details are not described herein again. The low power processor may be connected to a rear-facing camera through another low power interface, to implement a low power function, such as an intelligent code scanning function, based on an image captured by the rear-facing camera. Referring to FIG. 7B, the low power processor may control a front-facing camera (for example, a front-facing camera-0) and a rear-facing camera through one low power interface. For specific descriptions, refer to the foregoing, and details are not described herein again. The low power processor may be connected to another front-facing camera (for example, a front-facing camera-1) through another low power interface, to implement a low power function based on an image captured by the front-facing camera.

It should be noted that in this embodiment of this application, an example in which the low power processor controls switching between two cameras (which may be two front-facing cameras or one front-facing camera and one rear-facing camera) through one interface is used for description. In another embodiment, the circuit and the control method in this embodiment of this application may also be applied to a scenario in which the low power processor controls two or more cameras through one interface. A specific implementation thereof is the same as that of the solution in this embodiment of this application, and examples are not described one by one in this application.

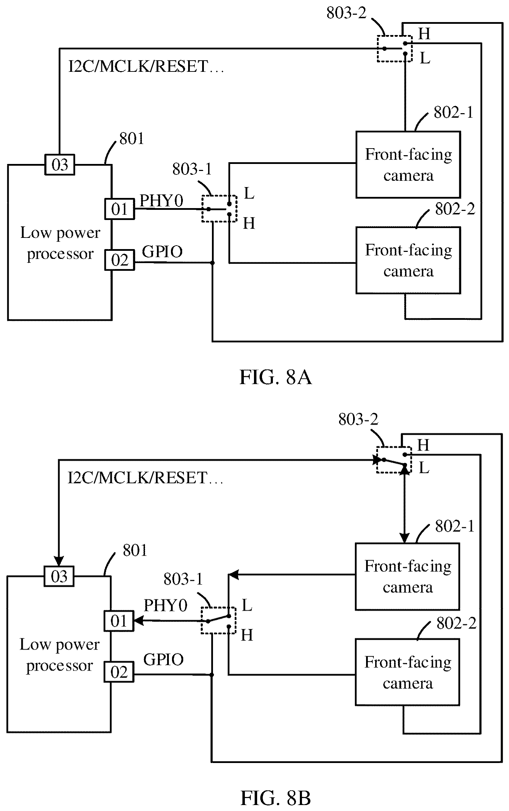

FIG. 8A is a schematic diagram of an example of circuit connection. Referring to FIG. 8A, the circuit structure includes but is not limited to a low power processor 801, a front-facing camera 802-1, and a front-facing camera 802-2. The front-facing camera 802-1 is coupled to an L end (also referred to as a first terminal) of a switch 803-1, and the front-facing camera 802-2 is coupled to an H end (also referred to as a second terminal) of the switch 803-1. The switch 803-1 is coupled to a 01 interface (also referred to as an AO interface or a data interface) of the low power processor 801. Optionally, the 01 interface of the low power processor 801 may be a PHY interface, and is configured to receive data input by a camera, for example, image data captured by the camera.

Still referring to FIG. 8A, a switch 803-2 is coupled to a 03 interface of the low power processor 801. The front-facing camera 802-1 is coupled to an L end of the switch 803-2, and the front-facing camera 803-2 is coupled to an H end of the switch 803-2.

Optionally, the 03 interface of the low power processor 801 may be an I2C, MCLK, MIPI, and/or RESET interface, and is configured to exchange data with the front-facing camera 802-1 or the front-facing camera 802-2. Data or signals output and input by the interface may be referred to as control signals or control data. For example, the low power processor 801 may output, through the 03 interface, control data (also referred to as a configuration parameter) or a control signal such as a power signal, a power-on time sequence, and an I2C parameter to the front-facing camera 802-1 or the front-facing camera 802-2, to enable the front-facing camera 802-1 or the front-facing camera 802-2.

Still referring to FIG. 8A, a 02 interface of the low power processor is a GPIO interface. The interface is separately coupled to the switch 803-1 and the switch 803-2, and is configured to output a control signal to the switch 803-1 and the switch 803-2, to control the switch 803-1 and the switch 803-2. Optionally, the 02 interface of the low power processor is connected to a control terminal of the switch 803-1 and a control terminal of the switch 803-2.

It should be noted that a type of the interface used to output a control signal and a configuration parameter in this embodiment of this application is only an example, and is not limited in this application. Repeated description is not provided in the following.

In this embodiment of this application, the low power processor 801 may output a control signal through the GPIO interface (that is, the interface 02), to control turn-off and turn-on of the switch 803-1 or the switch 803-2, thereby turning on a circuit between the low power processor 801 and the front-facing camera 802-1 or a circuit between the low power processor 801 and the front-facing camera 802-2.

For example, FIG. 8B is a schematic diagram of an example of circuit connection. Referring to FIG. 8B, the low power processor 801 outputs a first control signal (also referred to as a first GPIO signal) through the interface 02, to control the switch 803-1 to be placed at the L end, and control the switch 803-2 to be placed at the L end. Correspondingly, a path between the front-facing camera 802-1 and the interface 01 of the low power processor 801 is connected, and a path between the front-facing camera 802-1 and the interface 03 of the low power processor 801 is connected. The low power processor 801 may exchange data with the front-facing camera 802-1 through an interface between the interface 01 and the front-facing camera 802-1, for example, receive an image captured by the front-facing camera 802-1. The low power processor 801 may exchange control data with the front-facing camera 802-1 through an interface between the interface 03 and the front-facing camera 802-1, for example, output an electrical signal to the front-facing camera 802-1.

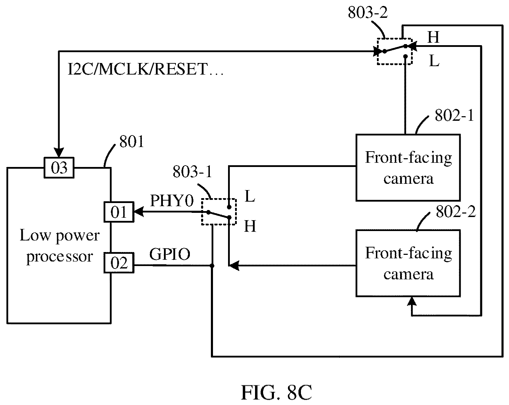

For another example, FIG. 8C is a schematic diagram of an example of circuit connection. Referring to FIG. 8C, the low power processor 801 outputs a second control signal (also referred to as a second GPIO signal) through the interface 02, to control the switch 803-1 to be placed at the H end, and control the switch 803-2 to be placed at the H end. Correspondingly, a path between the front-facing camera 802-2 and the interface 01 of the low power processor 801 is connected, and a path between the front-facing camera 802-2 and the interface 03 of the low power processor 801 is connected. In addition, a path between the front-facing camera 802-1 and the interface 01 of the low power processor 801 is disconnected, and a path between the front-facing camera 802-1 and the interface 03 of the low power processor 801 is disconnected.

Still referring to FIG. 8C, the low power processor 801 may exchange data with the front-facing camera 802-2 through an interface between the interface 01 and the front-facing camera 802-2, for example, receive an image captured by the front-facing camera 802-2. The low power processor 801 may exchange control data with the front-facing camera 802-2 through an interface between the interface 03 and the front-facing camera 802-2, for example, output an electrical signal to the front-facing camera 802-2.

For another example, the low power processor 801 may output a first control signal through the interface 03, to enable the front-facing camera 802-1. For circuit-related descriptions, refer to FIG. 8B. Details are not described herein again. In addition, a path between the front-facing camera 802-2 and the interface 01 of the low power processor 801 is disconnected, and a path between the front-facing camera 802-2 and the interface 03 of the low power processor 801 is disconnected.

That is, the low power processor outputs a first control signal or a second control signal through the interface 02, to control the switch 803-1 or the switch 803-2, thereby implementing switching control on a plurality of cameras.

It should be noted that circuit connection relationships in FIG. 8A~FIG. 8C are only examples. In another embodiment, a circuit may include more or fewer paths, and an objective is to implement switching between a plurality of cameras by controlling a switch. A specific circuit design may be set according to an actual requirement. This is not limited in this application.

In this embodiment of this application, the low power processor may switch a corresponding camera based on a scenario requirement of the electronic device, to obtain an image captured by a specified camera, and implement a low power function based on the captured image.

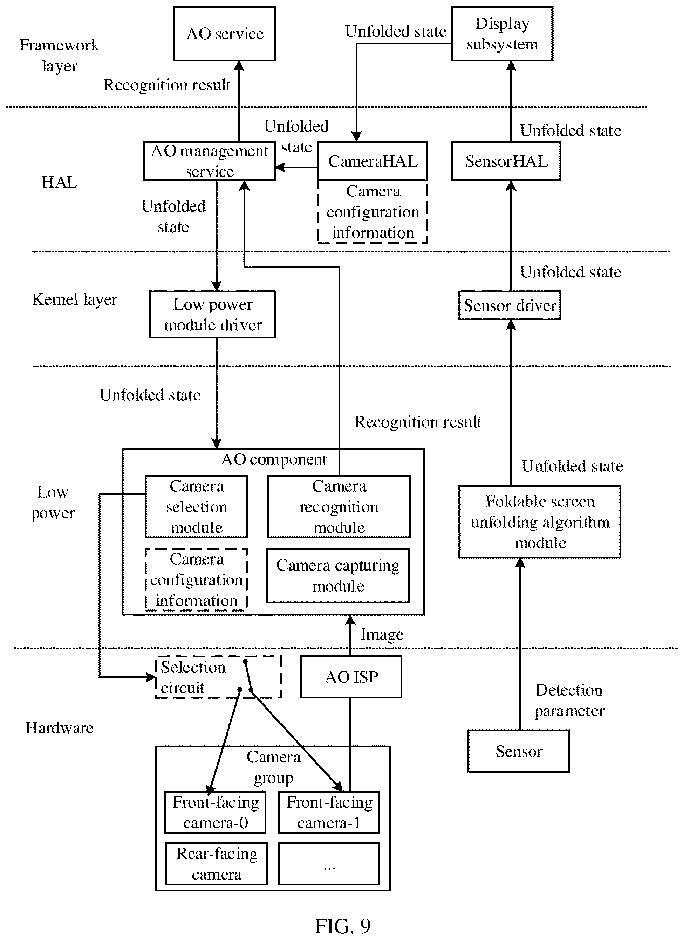

With reference to FIG. 8A~FIG. 8C, the following describes in detail a camera control method in an embodiment of this application by using a specific application scenario. FIG. 9 is a flowchart of an example of module interaction. Referring to FIG. 9, the following is specifically included.

In this embodiment of this application, in an initialization (for example, restarting or restoring factory setting) phase of an electronic device, a CameraHAL outputs camera configuration information to a Camera selection module. The camera configuration information is used to enable a corresponding camera. For example, the camera configuration information may include but is not limited to information such as a power configuration file, a camera module configuration file, a power-on time sequence, and an I2C address, and may be set according to an actual requirement. This is not limited in this application.

In this embodiment of this application, the camera configuration information stored in the CameraHAL includes but is not limited to configuration information of a front-facing camera-0, configuration information of a front-facing camera-1, and configuration information of a rear-facing camera. In this example, that a low power processor is configured to control switching between the front-facing camera-0 and the front-facing camera-1 is used as an example for description. Correspondingly, the CameraHAL may output the configuration information of the front-facing camera-0 and the configuration information of the front-facing camera-1 to the Camera selection module.

Optionally, the camera configuration information stored in the CameraHAL is set before delivery from the factory or updated with a system update. This is not limited in this application.

Optionally, the CameraHAL may send the camera configuration information to an AO management service, the AO management service outputs the camera configuration information to a low power module driver, and the low power module driver forwards the camera configuration information to the Camera selection module in an AO component.

Optionally, the Camera selection module stores the obtained camera configuration information in a memory, for example, a specified area in a RAM.

Optionally, a setting application of the electronic device may include a low power function option, and a user may enable a low power mode by triggering the low power function option. In response to a received user operation, the CameraHAL may indicate a control permission of a camera to a low power side (that is, the AO component). For example, the CameraHAL may send camera registration indication information to the AO management service, to indicate to allocate a use permission of the camera to the low power side, that is, the AO component. The AO management service outputs the camera registration indication information to the AO component through the low power module driver. The Camera selection module determines, in response to the camera registration indication information, that the camera can be used, which may also be understood as that the camera can be controlled. The Camera selection module may call a registration function to register to use a camera group. Registration may also be understood as binding. That is, only after the Camera selection module is bound to the camera group, the AO component can exchange data (including a control signal and image data) with the camera group. It should be noted that in a process of binding the AO component to the camera group, another module on the AP side cannot invoke a camera component, that is, an image captured by the camera component is only used on the low power side to perform corresponding low power processing.

For example, the Camera selection module may store a correspondence between camera configuration information and an application scenario requirement based on a preset control rule (which may be set according to an actual requirement, and is not limited in this application). For example, the correspondence stored in the Camera selection module may include but is not limited to a correspondence between an unfolded state and the configuration information of the front-facing camera-1, a folded state and the configuration information of the front-facing camera-0, and the like. The correspondence between the unfolded state and the configuration information of the front-facing camera-1 indicates that the front-facing camera-1 is enabled based on the configuration information of the front-facing camera-1 when the electronic device is in the unfolded state. The folded state and the configuration information of the front-facing camera-0 indicate that the front-facing camera-0 is enabled based on the configuration information of the front-facing camera-0 when the electronic device is in the folded state.

It should be noted that the correspondence in this embodiment of this application is only an example. In another embodiment, the correspondence may be set according to an actual scenario requirement. For example, in a use scenario of a bar-type mobile phone, the correspondence may further include a correspondence between a hand lifting action (that is, an operation of lifting the mobile phone) and a configuration relationship of the rear-facing camera, to indicate that the rear-facing camera is enabled after it is recognized that the user lifts the electronic device. That is, the electronic device may determine, by obtaining a movement status (for example, the electronic device switches from a moving state to a still state) and a pose (for example, a parameter such as a tilt angle of the electronic device) of the electronic device, whether the electronic device is lifted, and if the electronic device is lifted, invoke the rear-facing camera. The electronic device may determine, based on an image captured by the rear-facing camera, whether the image includes a graphic code. If the graphic code is included, a code scanning function may be called. In other words, a trigger condition for switching a camera by the electronic device in this embodiment of this application may be set according to different operations and different statuses. This is not limited in this application.

Further, it should be noted that, enabling each camera in this embodiment of this application means enabling the camera in a low power mode. In other words, an image captured by the camera is processed by an AO ISP, and then input to the low power side for subsequent processing.

Referring to FIG. 9, in this example, an example in which the electronic device changes from the folded state in (1) in FIG. 3 to the unfolded state in (3) in FIG. 3 is used for description. A sensor outputs a detection parameter to a foldable screen unfolding algorithm module. The foldable screen unfolding algorithm module may determine, based on the detection parameter input by the sensor, that a current status of the electronic device is the unfolded state. The foldable screen unfolding algorithm module outputs unfolded state indication information to a sensor driver, to indicate that the electronic device is in the unfolded state.

The sensor driver outputs the unfolded state indication information to a SensorHAL, to indicate that the electronic device is in the unfolded state. It should be noted that information transmission between modules may require format conversion to meet a format requirement of an interface between the modules. A specific transmission manner may be set according to an actual requirement. Details are not described in this application, and repeated description is not provided in the following.

The SensorHAL sends the unfolded state indication information to a display subsystem, to indicate that the electronic device is in the unfolded state. The display subsystem may switch display content of the electronic device to an internal screen (for example, the internal screen 103 in (3) in FIG. 3) for display. In addition, the display subsystem sends the unfolded state indication information to the CameraHAL. The CameraHAL detects that a current mode is a low power mode, that is, the CameraHAL may call an interface function with the AO management service based on a started low power process, to send the unfolded state indication information to the AO management service, so as to indicate that the electronic device is in the unfolded state.

The AO management service sends the unfolded state indication information to the low power module driver in response to an indication of the CameraHAL. The low power module driver sends the unfolded state indication information to the AO component. The Camera selection module in the AO component may enable a corresponding camera based on the unfolded state indication information. It should be noted that interaction between modules on the AP side in this embodiment of this application may be understood as calling an interface function of a peer module, to output information or data to another module. Repeated description is not provided in the following.

For example, the Camera selection module determines, based on the unfolded state indication information, that the electronic device is currently in the unfolded state. The Camera selection module may determine, based on the cached correspondence between the unfolded state and the configuration information of the front-facing camera-1, that the front-facing camera-1 needs to be enabled. For example, the Camera selection module may call a registration function to register with (or may be understood as bind to) the front-facing camera-1. In other words, a current use permission of the front-facing camera-1 corresponds to the AO component. Another upper-layer module cannot invoke the front-facing camera-1.

Correspondingly, as shown in FIG. 8A, it is assumed that the front-facing camera 802-2 in FIG. 8A is the front-facing camera-1 on the internal screen. The Camera selection module outputs a second control signal through the interface 02 of the low power processor, to control the switch 803-1 to be placed at the H end and control the switch 803-2 to be placed at the H end. Correspondingly, as shown in FIG. 8C, a path between the front-facing camera 802-2 and the interface 01 of the low power processor 801 is connected, and a path between the front-facing camera 802-2 and the interface 03 of the low power processor 801 is connected.

Still referring to FIG. 9, for example, after the Camera selection module switches to the front-facing camera-1 by controlling a selection circuit, the Camera selection module may exchange control data (or a control signal) with the front-facing camera-1 based on the configuration information of the front-facing camera-1. For example, the Camera selection module may output, through the interface 02 of the low power processor, an electrical signal, a clock signal, and the like to the front-facing camera-1. This is not limited in this application.

For example, after being enabled, the front-facing camera-1 captures an image. The AO ISP may perform image processing on the image captured by the front-facing camera-1, and output a processed image to the AO component. The Camera recognition module and the Camera capturing module in the AO component may process and recognize the image. As described above, the Camera recognition module may be preset with at least one algorithm, for example, including but not limited to a facial recognition algorithm, a face orientation algorithm, an intelligent code scanning algorithm, an air gesture algorithm, and the like. The Camera recognition module may recognize the image based on at least one algorithm, to recognize an air gesture, a face orientation, a facial feature, an image code, and/or the like.

It may be understood that a low power scenario (which may also be referred to as a low power service) in this embodiment of this application may include but is not limited to a scenario such as code recognition, an air gesture, a face orientation, a face appearance, and an eye gaze.

A feature of the code recognition scenario includes intelligent code recognition. User experience includes: The front-facing camera is aligned with an image code, and after confirmation, a corresponding service page is started.

Features of the air gesture scenario include: page up and down in mid-air, screenshot in mid-air, shortcut task card customization, and the like. Corresponding user experience is respectively as follows: An app or a section in an app can be continuously flipped up and down; a screenshot can be taken in mid-air; and a shortcut card is automatically popped up based on a pressing gesture.

Features of the face orientation scenario include a face orientation intelligent portrait/landscape mode, and face orientation assisted photographing and imaging. Corresponding user experience is respectively as follows: When a user lies on the side and uses a mobile phone, an orientation of an app is the same as that of a face; and an imaging result has a same orientation as a face during framing.

A feature of the face appearance scenario includes face AOD (AlwaysonDisplay, always on display). Corresponding user experience is as follows: When approaching in a screen-off state, a person can see AOD without a touch.

Features of the eye gaze scenario include gaze always on and gaze incoming call volume reduction. Corresponding user experience is respectively as follows: A screen is not turned off in a case of continuous gaze or intermittent gaze; and gazing a screen can reduce volume of a ring tone during ringing for an incoming call.

The low power side (which is specifically a Camera Face Detect module or the like) may perform recognition based on the foregoing scenario requirement with reference to a pre-stored algorithm, to recognize a facial feature (for example, an eye gaze), an air gesture, and the like. The AO component may output a recognition result to the AO management service. The AO management service outputs the recognition result to an AO service. The AO service may perform a corresponding low power function based on the recognition result. For example, if the recognition result indicates an eye gaze, the screen may not be turned off. For a specific implementation, refer to embodiments in the conventional technology. This is not limited in this application.

For example, in a process in which the electronic device is in the unfolded state, the low power processor (that is, the low power side) continuously invokes the front-facing camera-1, to perform a corresponding low power function in a low power mode based on the image captured by the front-facing camera-1.

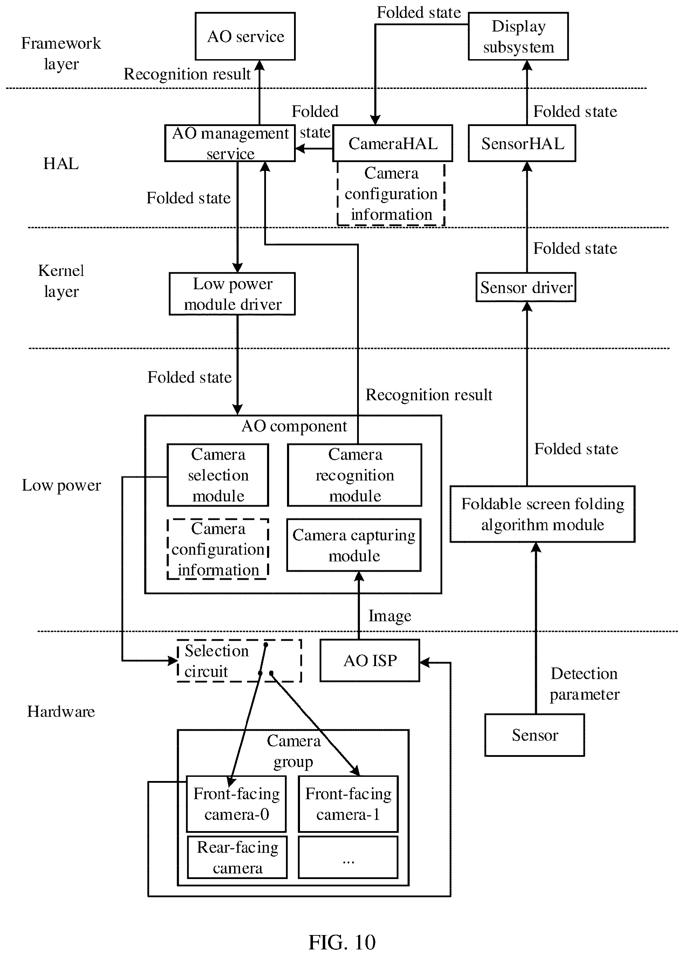

In this embodiment of this application, as shown in FIG. 10, if the electronic device switches from the unfolded state to the folded state, correspondingly, the display subsystem may obtain folded state indication information. A specific obtaining manner is similar to that for the unfolded state, and details are not described herein again.

The display subsystem may send the folded state indication information to the CameraHAL, and the CameraHAL sends the folded state indication information to the Camera selection module. For a specific transmission process, refer to FIG. 9. Details are not described herein again.

For example, the Camera selection module determines, based on the cached correspondence in response to the received folded state indication information, that the front-facing camera-0 needs to be switched to. Optionally, the Camera selection module deregisters with the front-facing camera-1, and calls a registration interface to register with the front-facing camera-0.

Correspondingly, as shown in FIG. 8A, it is assumed that the front-facing camera 802-1 in FIG. 8A is the front-facing camera-0 on the internal screen. The Camera selection module outputs a first control signal through the interface 02 of the low power processor, to control the switch 803-1 to be placed at the L end and control the switch 803-2 to be placed at the L end. Correspondingly, as shown in FIG. 8B, a path between the front-facing camera 802-1 and the interface 01 of the low power processor 801 is connected, and a path between the front-facing camera 802-1 and the interface 03 of the low power processor 801 is connected. In addition, a path between the front-facing camera 802-1 and the interface 01 of the low power processor 801 is disconnected, and a path between the front-facing camera 802-1 and the interface 03 of the low power processor 801 is disconnected.

Still referring to FIG. 10, for example, after the Camera selection module switches to the front-facing camera-0 by controlling a selection circuit, the Camera selection module may exchange control data (or a control signal) with the front-facing camera-0 based on the configuration information of the front-facing camera-0. For example, the Camera selection module may output, through the interface 02 of the low power processor, an electrical signal, a clock signal, and the like to the front-facing camera-0. This is not limited in this application.

For example, after being enabled, the front-facing camera-0 captures an image. The AO ISP may perform image processing on the image captured by the front-facing camera-0, and output a processed image to the AO component. The Camera recognition module and the Camera capturing module in the AO component may process and recognize the image. For another undescribed part, refer to FIG. 9. Details are not described herein again.

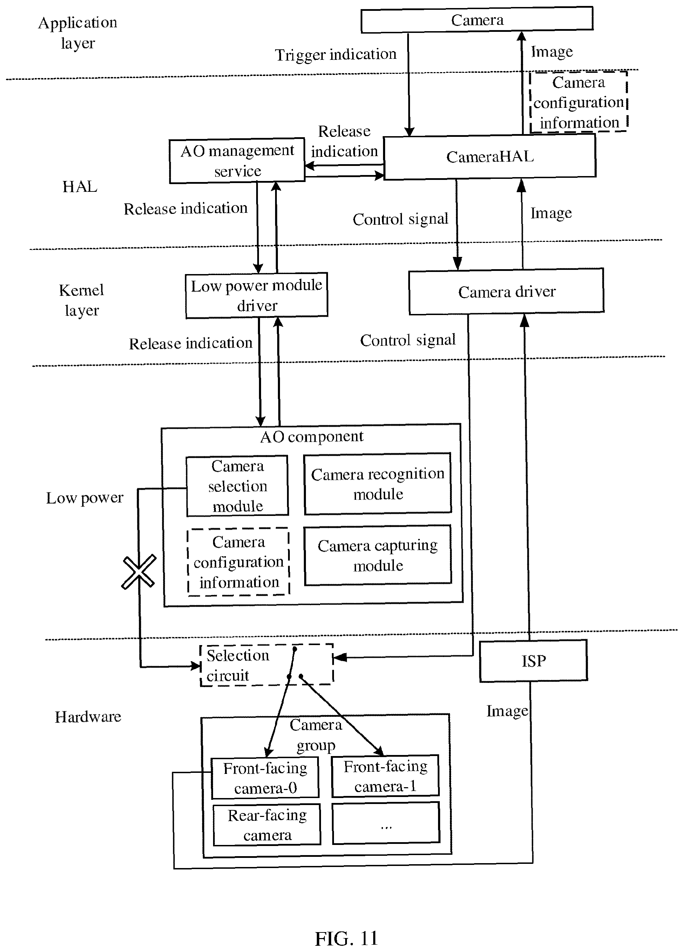

In this embodiment of this application, if the user triggers a camera application (or another application), the low power processor releases a control permission and a use permission of the camera group, and the CameraHAL reclaims the control permission and the use permission of the camera group. FIG. 11 is a schematic flowchart of an example of module interaction. Referring to FIG. 11, the user taps the camera application, and the camera application sends trigger indication information to the CameraHAL in response to a received user operation, to indicate to invoke a camera. The CameraHAL sends release indication information to the AO management service in response to the indication of the camera application, to indicate to release the use permission of the camera component (which may also be understood as deregistration or unbinding). The AO management service sends the release indication information to the low power module driver, and the low power module driver sends the release indication information to the AO component.

The Camera selection module calls a registration function (which may also be understood as a deregistration function), to deregister with (that is, unbind from) the camera group. This may be understood as releasing the control permission and the use permission of the camera component, or may be understood as that a path between the Camera selection module and the selection circuit is currently unavailable. For example, the Camera selection module still caches the camera configuration information.

For example, after releasing the camera component, the Camera selection module sends a response message to the low power module driver, to indicate that the camera component has been released. The low power module driver sends the response message to the AO management service, and the CameraHAL determines, based on the response message sent by the AO management service, that the Camera selection module has released the camera component.

For example, the CameraHAL may determine, based on an obtained form (for example, the folded state obtained in FIG. 11) of the electronic device, that the front-facing camera-0 (that is, a front-facing camera on an external screen) needs to be invoked. The CameraHAL sends a control signal to the camera driver, to indicate to invoke the front-facing camera-0. The camera driver controls the selection circuit based on the indication of the CameraHAL, to enable the front-facing camera-0. It should be noted that the selection circuit between the camera driver and the camera group may be the same as the selection circuit between the Camera selection module and the camera group, that is, a same group of circuits is shared. In another embodiment, the selection circuit between the camera driver and the camera group may alternatively be independent. This is not limited in this application.

For example, after being enabled, the front-facing camera-0 captures an image. The ISP performs image processing on the image captured by the front-facing camera, and outputs the image to the camera driver. The camera driver outputs the image to the CameraHAL, and the CameraHAL outputs the image to the camera application. For specific interaction details between modules, refer to embodiments in the conventional technology. This is not limited in this application.

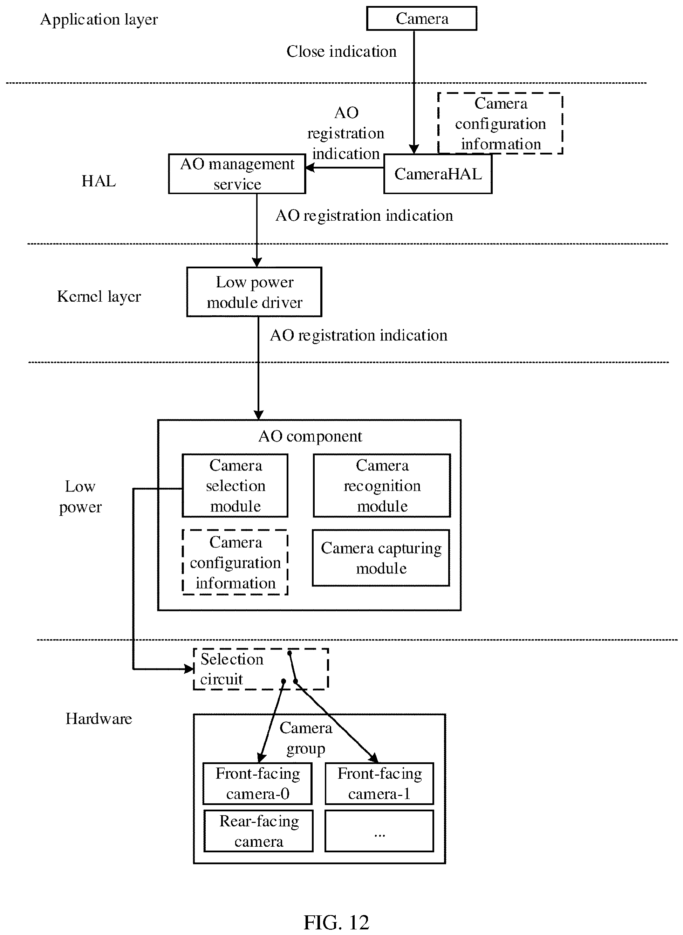

For example, after the user closes the camera application, the CameraHAL indicates the control permission and the use permission of the camera group to the low power side again. FIG. 12 is a schematic diagram of an example of module interaction. Referring to FIG. 12, the camera application is closed in response to a received user operation. The camera application sends a close indication to the CameraHAL to indicate that the camera application stops using the camera component. The CameraHAL sends AO registration indication information to the AO management service, where the AO registration indication information includes a current form (the folded state or the unfolded state) of the electronic device, and the AO registration indication information indicates the low power side to register with the camera component (that is, bind to the camera component). The AO management service sends the AO registration indication to the low power module driver, and the low power module driver sends the AO registration indication information to the AO component. It should be noted that the current form of the electronic device sent by the CameraHAL is a status of the electronic device that the CameraHAL last obtains from the display subsystem. For example, in a process in which the camera application uses the camera group, the electronic device may be changed from the folded state to the unfolded state, and the CameraHAL may switch a corresponding camera based on the form change of the electronic device. After the camera application is closed, the CameraHAL may determine that a last obtained form of the electronic device is the unfolded state, and the CemaraHAL may

In response to the AO registration indication information, the Camera selection module calls a registration function to register with the camera component, that is, bind to the camera component. This may also be understood as that use of a path between the Camera selection module and the selection circuit is restored. For a subsequent image processing step and the like, refer to FIG. 9 or FIG. 10. Details are not described herein again.

For example, as described above, after the Camera selection module deregisters with the camera component, the previously obtained camera configuration information is still cached. Correspondingly, after registering with the camera component again, the Camera selection module may continue to exchange data or a control signal with the camera by using the cached camera configuration information.

It may be understood that, to implement the foregoing functions, the electronic device includes corresponding hardware and/or software modules for performing the functions. With reference to the example algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods for each specific application with reference to the embodiments to implement the described functions, but it should not be considered that this implementation goes beyond the scope of this application.

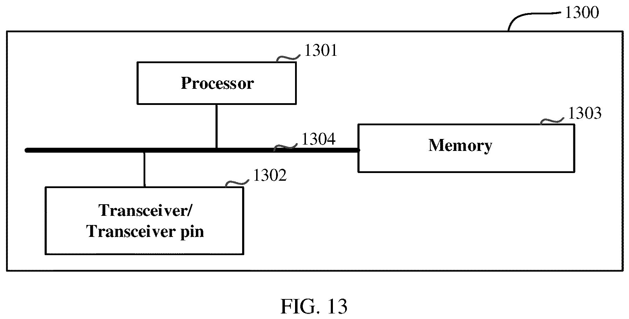

In an example, FIG. 13 is a schematic block diagram of an apparatus 1300 according to an embodiment of this application. The apparatus 1300 may include a processor 1301 and a transceiver/transceiver pin 1302, and optionally, further include a memory 1303.

The components of the apparatus 1300 are coupled together by using a bus 1304. In addition to a data bus, the bus 1304 further includes a power bus, a control bus, and a status signal bus. However, for clear description, various buses are referred to as the bus 1304 in the figure.

Optionally, the memory 1303 may be configured to store instructions in the foregoing method embodiments. The processor 1301 may be configured to execute the instructions in the memory 1303, control a receiving pin to receive a signal, and control a sending pin to send a signal.

The apparatus 1300 may be the electronic device or a chip in the electronic device in the foregoing method embodiments.

All related content of each step in the foregoing method embodiment may be cited to a function description of a corresponding functional module, and details are not described herein again.

An embodiment further provides a computer storage medium. The computer storage medium stores computer instructions. When the computer instructions are run on an electronic device, the electronic device is enabled to perform the foregoing related method steps to implement the method in the foregoing embodiments.

An embodiment further provides a computer program product. When the computer program product runs on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip performs the method in the foregoing method embodiments.

The electronic device, the computer storage medium, the computer program product, or the chip provided in the embodiment is configured to perform the corresponding method provided above. Therefore, for beneficial effects that can be achieved by the electronic device, the computer storage medium, the computer program product, or the chip, refer to beneficial effects in the corresponding method provided above. Details are not described herein again.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the scope of the technical solutions in embodiments of this application.

## Claims

1. A camera control method, applied to an electronic device, wherein the electronic device comprises a first camera and a second camera, the first camera and the second camera are coupled to a first switch, the first switch is coupled to a low power processor, the first switch is configured to selectively connect a first data path between the first camera and the low power processor or a second data path between the second camera and the low power processor, and the method comprises:
switching, by the electronic device, from a first state to a second state in response to a received first user operation;
detecting that the electronic device switches from the first state to the second state, and connecting, by the first switch, the first data path;
performing image recognition on an obtained first image, and obtaining a first image recognition result, wherein the first image is captured by the first camera and processed by a low power image signal processor ISP;
switching, by the electronic device, from the second state to the first state in response to a received second user operation;
detecting that the electronic device switches from the second state to the first state, and connecting, by the first switch, the second data path; and
performing image recognition on an obtained second image, and obtaining a second image recognition result, wherein the second image is captured by the second camera and processed by the low power ISP.

2. The method according to claim 1, wherein the detecting that the electronic device switches from the first state to the second state, and connecting, by the first switch, the first data path comprises:
determining, based on camera configuration information, that a camera corresponding to the second state is the first camera;
connecting the first data path based on configuration information corresponding to the first camera in the camera configuration information; and
obtaining the first image through the first data path.

3. The method according to claim 2, wherein the first camera and the second camera are coupled to a second switch, the second switch is coupled to the low power processor, and the second switch is configured to selectively connect a first control path between the first camera and the low power processor or a second control path between the second camera and the low power processor; and the detecting that the electronic device switches from the first state to the second state, and connecting, by the first switch, the first data path further comprises:
controlling, based on the configuration information corresponding to the first camera, the second switch to connect the first control path; and
transmitting a control signal to the first camera through the first control path.

4. The method according to claim 3, wherein the detecting that the electronic device switches from the second state to the first state, and connecting, by the first switch, the second data path comprises:
determining, based on the camera configuration information, that a camera corresponding to the first state is the second camera; and
connecting the second data path based on configuration information corresponding to the second camera in the camera configuration information.

5. The method according to claim 4, wherein the detecting that the electronic device switches from the second state to the first state, and connecting, by the first switch, the second data path comprises:
controlling, based on the configuration information corresponding to the second camera, the second switch to connect the second control path; and
transmitting a control signal to the second camera through the second control path.

6. The method according to claim 3 or 5, wherein
the first switch is coupled to a first port of the low power processor; and
the second switch is coupled to a second port of the low power processor.

7. The method according to any one of claims 1 to 6, wherein the first state of the electronic device is a folded state, and the second state of the electronic device is an unfolded state.

8. The method according to claim 7, wherein the first camera is disposed on an external screen of the electronic device, and the second camera is disposed on an internal screen of the electronic device.

9. The method according to any one of claims 1 to 7, wherein the first camera is a front-facing camera, and the second camera is a rear-facing camera.

10. A control circuit, comprising:
a low power processor;
a first switch, wherein the first switch is coupled to the low power processor; and
a first camera and a second camera, wherein the first camera and the second camera are coupled to the first switch, and the first switch is configured to selectively connect a first data path between the first camera and the low power processor or a second data path between the second camera and the low power processor.

11. The control circuit according to claim 10, wherein the first camera is coupled to a first terminal of the first switch, and the second camera is coupled to a second terminal of the first switch.

12. The control circuit according to claim 10, wherein the first camera and the second camera are coupled to a second switch, the second switch is coupled to the low power processor, and the second switch is configured to selectively connect a first control path between the first camera and the low power processor or a second control path between the second camera and the low power processor.

13. The control circuit according to claim 12, wherein
the first switch is coupled to a first port of the low power processor; and
the second switch is coupled to a second port of the low power processor.

14. The control circuit according to any one of claims 10 to 13, wherein
the low power processor is configured to send a first control signal to the first switch, to control the first switch to connect the first data path; and
the low power processor is further configured to send a second control signal to the first switch, to control the first switch to connect the second data path.

15. The control circuit according to any one of claims 10 to 14, wherein the first camera is disposed on an external screen of the electronic device, and the second camera is disposed on an internal screen of the electronic device.

16. The control circuit according to any one of claims 10 to 14, wherein the first camera is a front-facing camera, and the second camera is a rear-facing camera.

17. An electronic device, comprising:
one or more processors;
a memory; and
one or more computer programs, wherein the one or more computer programs are stored in the memory, and when the computer programs are executed by the one or more processors, the electronic device is enabled to perform the method according to any one of claims 1-9.

18. A computer storage medium, comprising computer instructions, wherein when the computer instructions are run on an electronic device, the electronic device is enabled to perform the method according to any one of claims 1-9.

19. A computer program product, wherein when the computer program product runs on a computer, the computer is enabled to perform the method according to any one of claims 1-9.

20. A chip, comprising one or more interface circuits and one or more processors, wherein the interface circuit is configured to: receive a signal from a memory of an electronic device, and send the signal to the processor, wherein the signal comprises computer instructions stored in the memory, and when the processor executes the computer instructions, the electronic device is enabled to perform the method according to any one of claims 1-9.
